# EUROPÄISCHE PATENTANMELDUNG

(11) **EP 3 064 061 A1**
(43) Veröffentlichungstag der Anmeldung: **07.09.2016**
(21) Anmeldenummer: 15195638.0
(22) Anmeldetag: 20.11.2015
(51) Int. Cl.: A01M 7/00

(54) **VORRICHTUNG ZUM AUSBRINGEN VON FLÜSSIGEN UND/ODER FESTEN WIRKSTOFFEN UND VERFAHREN ZUR STEUERUNG EINER SOLCHEN VORRICHTUNG**

(30) Priorität: 02.03.2015 DE 102015102975
(71) Anmelder: HORSCH LEEB Application Systems GmbH, 94562 Oberpöring (DE)
(72) Erfinder: LEEB, Theodor, 94562 Oberpöring (DE)
(74) Vertreter: Benninger, Johannes

(57) **Zusammenfassung**

Es ist eine Vorrichtung zum Ausbringen von flüssigen und/oder festen Wirkstoffen sowie ein Verfahren zur Steuerung der Vorrichtung offenbart. Die Vorrichtung umfasst ein Trägerfahrzeug, mindestens ein zumindest um eine Drehachse schwenkbar angeordnetes Gestänge und mindestens eine Sensoranordnung zur Erfassung einer Drehgeschwindigkeit und/oder einer Drehlage des Gestänges um die Drehachse in Bezug auf eine Referenzebene. Eine Regelungseinrichtung verarbeitet Ausgangssignale der Sensoranordnungen zu Steuerungssignalen für einen Aktor zur Verstellung des Gestänges.

Der wenigstens eine Aktor ist durch wenigstens einen mit elektromagnetischer oder elektromotorischer Antriebskraft arbeitenden Linear- oder Drehantrieb gebildet, der eine Stellverbindung zwischen dem Trägerfahrzeug und dem schwenkbaren Gestänge herstellt, wobei der wenigstens eine Linear- oder Drehantrieb für jede der beiden Verstellrichtungen des Gestänges jeweils eine mit elektromagnetischer oder elektromotorischer Antriebskraft beaufschlagbare aktive Stell- oder Kraftseite aufweist.

Bei gegenüber dem Trägerfahrzeug ruhendem oder sich geringfügig bewegendem Gestänge herrscht ein ungefähr gleiches Kraftniveau in den aktiven Stellseiten zweier gegensinnig arbeitender Linear- oder Drehantrieb bzw. eines doppelt wirkenden Linear- oder Drehantriebs. Bei gegenüber dem Trägerfahrzeug verstelltem Gestänge ist eine definierte Differenzkraft zwischen den aktiven Stellseiten der beiden gegensinnig arbeitenden Linear- oder Drehantriebe bzw. des doppelt wirkenden Linear- oder Drehantriebs einstellbar.

## Beschreibung

Die vorliegende Erfindung betrifft eine Vorrichtung zum Ausbringen von flüssigen und/oder festen Wirkstoffen mit den Merkmalen des unabhängigen Anspruchs 1. Weiterhin betrifft die Erfindung ein Verfahren zur Steuerung einer solchen Vorrichtung mit den Merkmalen des unabhängigen Verfahrensanspruchs 10.

Feldspritzen und an Arbeitsmaschinen wie Traktoren angehängte Spritzgestänge weisen teilweise sehr große Arbeitsbreiten von mehr als zwanzig Metern auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung des Spritzmittels jeweils einen definierten Spritzkegel aufweisen, ergibt sich aus einer veränderlichen Distanz der Düsen zum Boden eine ungleichmäßige Bedeckung des Ackers mit Spritzmittel. Auch steigt die Gefahr der Abtrift des Spritzmittels mit zunehmender Distanz der Spritzdüsen vom Boden stark an, da die fein verstäubten Tropfen bereits von geringen Luftbewegungen negativ beeinflusst werden.

Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, da bereits geringe Schrägstellungen des Spritzgestänges zu großen Abstandsdifferenzen der Düsen zum Boden führen.

Hierzu ist bekannt, ein Spritzgestänge um einen zentralen Punkt zumindest um eine Drehachse drehbar oder schwenkbar an einem Trägerfahrzeug aufzuhängen. Die Drehachse verläuft dabei vorzugsweise parallel zur Längsachse des Trägerfahrzeugs. Um eine gleichmäßige Ausbringung des Spritzmittels zu gewährleisten, muss der Abstand zwischen Oberkante des Bestandes und den Spritzdüsen konstant auf einen definierten Abstand geregelt werden. Auf horizontalen Landwirtschaftsflächen kann dies grundsätzlich durch eine Selbstnivellierung erreicht werden, bei der sich das Spritzgestänge selbst in der Horizontalen ausrichtet, indem der Schwerpunkt des Spritzgestänges unterhalb des zentralen Punkts vorgesehen wird und das Spritzgestänge beispielsweise frei pendelnd drehbar aufgehängt ist. Der gewünschte Effekt stellt sich jedoch nicht bei Landwirtschaftsflächen ein, die entlang eines Hangs verlaufen.

Um den Abstand zwischen Oberkante des Bestandes und den an einem um einen zentralen Punkt drehbar aufgehängten Spritzgestänge angeordneten Spritzdüsen bei beliebig verlaufenden Landwirtschaftsflächen konstant auf einen definierten Abstand zu regeln, ist daher bekannt, ein beispielsweise in einen gewünschten Abstand zum Boden angehobenes Spritzgestänge so um eine durch den zentralen Punkt laufende Drehachse zu drehen, dass dieser Abstand über die gesamte Arbeitsbreite optimiert wird. Hierzu muss ein Ausrichtungsänderungsdrehmoment um eine durch den zentralen Punkt laufende Drehachse auf das Spritzgestänge ausgeübt werden. Dies geschieht vermittels mindestens eines Aktors, welcher zumindest bedarfsweise eine ein Ausrichtungsänderungsdrehmoment um die Drehachse bewirkende Kraft oder ein Kräftepaar vom Trägerfahrzeug auf das Spritzgestänge überträgt, um dessen Ausrichtung zu verändern.

Dieses Ausrichtungsänderungsdrehmoment beschleunigt das Spritzgestänge in einer gewünschten Solldrehrichtung. Auch nach Beendigung der Einwirkung des Ausrichtungsänderungsdrehmomentes würde sich das Spritzgestänge ohne Gegenmaßnahmen weiterhin um die Drehachse drehen, da es bedingt durch das Massenträgheitsmoment seinen Drehimpuls beibehält. Um das Spritzgestänge wieder abzubremsen, muss daher ein Bremsdrehmoment entgegengesetzt zum vorherigen Ausrichtungsänderungsdrehmoment eingeleitet werden. Dieses Bremsdrehmoment wirkt der durch das Ausrichtungsänderungsdrehmoment angestoßenen Drehbewegung entgegen und dämpft somit das System aus um den zentralen Punkt drehbar aufgehängtem Spritzgestänge.

Bisher werden zur Aufbringung des Bremsdrehmoments für gewöhnlich mechanische Dämpfer verwendet, die zwischen Trägerfahrzeug und Spritzgestänge angebracht sind. Dreht sich das Trägerfahrzeug beispielsweise aufgrund von Unebenheiten um die Drehachse und das Spritzgestänge steht still, entsteht auch eine Relativdrehung zwischen Trägerfahrzeug und Spritzgestänge. Ein mechanischer Dämpfer, der zwischen Trägerfahrzeug und Spritzgestänge angebracht ist, würde dieser Relativdrehung entgegengesetzt wirken und somit ein um die Drehachse wirkendes Drehmoment auf das Spritzgestänge übertragen, wodurch eine Kopplung zwischen Trägerfahrzeug und Spritzgestänge besteht.

Diese Kopplung besteht gleichermaßen, wenn als Basis für eine Regelung des Drehmoments ein Messsystem verwendet wird, welches einen Relativwinkel und/oder eine Relativdrehung zwischen Trägerfahrzeug und Spritzgestänge misst.

Darüber hinaus sind Messsysteme bekannt, die am Spritzgestänge angeordnete Neigungssensoren verwenden, um die Lage des Spritzgestänges zu bestimmen. Durch zeitliche Ableitung der Neigung kann die Drehgeschwindigkeit des Spritzgestänges unabhängig vom Trägerfahrzeug erhalten werden. Neigungssensoren liefern jedoch bei Querbeschleunigungen, wie sie beispielsweise bei Kurvenfahrt auftreten, eine fehlerhafte Neigung. Somit wird auch eine fehlerhafte Drehgeschwindigkeit berechnet.

Ein Spritzgestänge, welches über einen aus Segmenten zusammengesetzten Ausleger verfügt, ist aus dem Stand der Technik bereits bekannt. So wird in der DE 32 02 569 A1 eine Verteilermaschine offenbart, bei der einzelne Segmente miteinander verbunden sind und die Bewegung der einzelnen Segmente passiv erfolgt. Für diesen Mechanismus ist ein stützendes Element auf der Außenseite eines jeden Auslegers notwendig, um den Schwenkvorgang zu ermöglichen. Zur Vermeidung von Ertragseinbußen ist es jedoch wünschenswert, ein Anpassen der einzelnen Segmente hinsichtlich unterschiedlicher Bodenkonturen zu erreichen, ohne mit dem Boden in direktem Kontakt zu stehen.

Weiterhin wird in der DE 18 33 453 U ein Spritzgestänge offenbart, welches Düsenbäume umfasst, die an einem Ausleger mittels elastischer Elemente angeordnet sind. Durch die elastischen Elemente können sich die Düsenbäume auch nach einem Schwenkvorgang des Auslegers in einer vertikalen Position wiederfinden. Da der Ausleger gemäß diesem Dokument nur um eine Achse schwenkbar angeordnet ist, besitzt das Spritzgestänge lediglich eine eingeschränkte Flexibilität. Aufgrund der hohen Unregelmäßigkeit von in der Praxis auftretenden Bodenstrukturen sind Spritzgestänge mit einer größeren Flexibilität wünschenswert, um eine gleichmäßige Verteilung der Spritzflüssigkeit auf den Untergrund zu gewährleisten.

Durch DE 10 2007 025 751 A1 ist eine Ausbringvorrichtung zum Ausbringen von flüssigen und/oder festen Wirkstoffen bekannt. Die Ausbringungsvorrichtung umfasst ein an einem selbstfahrenden oder gezogenen Fahrzeug angeordnetes, ungefähr parallel zu einer Fahrtrichtung um einen Aufhängepunkt schwenkbar gelagertes Ausbringgestänge. Das Ausbringungsgestänge besteht aus einem Mittelteil und seitlichen Auslegerarmen. Der Mittelteil ist über wenigstens eine regelbare Stelleinrichtung mit einem Rahmenabschnitt des Fahrzeuges gekoppelt. Die Stelleinrichtung leitet eine definierte Stellkraft und/oder ein definiertes Stellmoment zwischen dem Mittelteil und dem Rahmenabschnitt zur Verschwenkung des Ausbringgestänges relativ zum Rahmenabschnitt ein. Die Einleitung erfolgt unabhängig von Störmomenten, die aus Fahrzeugbewegungen resultieren.

Durch FR 2 779 031 A1 ist eine auch als begleitend bezeichnete, automatisierte Ausbringvorrichtung zum Ausbringen von flüssigen und/oder festen Wirkstoffen bekannt. Die Ausbringungsvorrichtung umfasst ein an einem selbstfahrenden oder gezogenen Fahrzeug angeordnetes, ungefähr parallel zu einer Fahrtrichtung um einen Aufhängepunkt schwenkbar gelagertes Ausbringgestänge. Das Ausbringungsgestänge besteht aus einem Mittelteil und seitlichen Auslegerarmen. Der Mittelteil ist über wenigstens eine regelbare Stelleinrichtung mit einem Rahmenabschnitt des Fahrzeuges gekoppelt. Die Stelleinrichtung leitet über mindestens zwei Angriffspunkte mindestens zwei Stellkräfte zwischen dem Mittelteil und dem Rahmenabschnitt zur Verschwenkung des Ausbringgestänges innerhalb einer vertikalen Ebene relativ zum Rahmenabschnitt ein. Die Einleitung erfolgt unter Überwindung der Rotationsträgheit des Ausbringgestänges unter gleichzeitiger Abschwächung störender Bewegungen dessen Schwerpunkts. Dabei wird der Schwenkpunkt innerhalb der vertikalen Ebene quer zur Fahrtrichtung verschoben. Eine Regelung führt das Ausbringgestänge nach. Die Stelleinrichtung kann beispielsweise als eine Schraubspindel oder hydraulisch ausgeführt sein.

Durch FR 2 270 774 A1 ist eine Ausbringvorrichtung zum Ausbringen von flüssigen und/oder festen Wirkstoffen bekannt. Die Ausbringungsvorrichtung umfasst ein an einem selbstfahrenden oder gezogenen Fahrzeug angeordnetes, ungefähr parallel zu einer Fahrtrichtung gelagertes Ausbringgestänge. Das Ausbringungsgestänge, bestehend aus einem Mittelteil und seitlichen Auslegerarmen, ist vermittels zweier Zapfen mit einem vertikalen Zylinder verbunden, der an einem Aufhängepunkt eines Rahmenabschnitts um eine Achse parallel zur Fahrtrichtung schwenkbar angeordnet ist. Das gegenüberliegende Ende des vertikalen Zylinders ist zwischen zwei sich gegen den Rahmenabschnitt abstützenden, horizontalen Zylindern geführt. Durch Betätigung der horizontalen Zylinder kann der vertikale Zylinder und damit das Ausbringungsgestänge parallel zum Boden ausgerichtet werden. Die Ausbringungsvorrichtung sieht zwei Betriebsmodi vor. Ein Betriebsmodus sieht eine Ausrichtung des Ausbringungsgestänges durch eine Höhenverstellung des vertikalen Zylinders und durch seitliches Neigen des vertikalen Zylinders vermittels der horizontalen Zylinder vor. Ein anderer Betriebsmodus sieht auf holperigem Gelände die Entfernung des unteren Zapfens vor, so dass das Ausbringungsgestänge frei pendeln kann.

Durch DE 41 40 254 A1 ist eine ultraschallsensorgesteuerte Höhen- und Lagesteuerung für eine Ausbringvorrichtung zum Ausbringen von flüssigen und/oder festen Wirkstoffen bekannt.

Durch WO 2004/041446 A1 ist bekannt, bei einer Ausbringvorrichtung zum Ausbringen von flüssigen und/oder festen Wirkstoffen harmonische Kopplungen zu vermeiden, indem Eigenresonanzfrequenzen der Auslegerarme eines Ausbringgestänges sowohl im leeren Zustand, als auch im vollen Zustand der Leitungen, sowie im Sprühbetrieb, die Resonanzfrequenz einer Drehschwingung des pendelnd aufgehängten Ausbringgestänges, die Resonanzfrequenz einer Federung des Fahrzeugs, an dem die Ausbringungsvorrichtung befestigt ist, der Resonanzfrequenz schwappenden Wirkstoffs in einem hierfür vorgesehenen Tank, sowie der Resonanzfrequenz einer Wirkstoffpumpe voneinander unabhängig sind. Hierzu kann die Länge der Auslegerarme verstellbar sein.

Durch EP 0 157 592 A2 sind Ausbringvorrichtungen zum Ausbringen von flüssigen und/oder festen Wirkstoffen bekannt. Eine erste Ausbringvorrichtung sieht eine frei schwingende Aufhängung eines Ausbringgestänges vor, wobei von Zeit zu Zeit Korrekturvorgänge stattfinden, in denen entsprechend eines vorgegebenen Abstands zwischen den Auslegerarmen und dem Boden die Höhe des Ausbringgestänges über dem Boden nachgeregelt wird. Eine zweite Ausbringvorrichtung sieht eine feste Ausrichtung des Ausbringgestänges vor, nach und während aufeinander folgenden Korrekturvorgängen vor, in denen entsprechend eines vorgegebenen Abstands zwischen den Auslegerarmen und dem Boden die Höhe des Ausbringgestänges über dem Boden nachgeregelt wird. Eine dritte Ausbringvorrichtung sieht vor, das Ausbringgestänge passiv aufzuhängen und die passive Aufhängung zumindest hinsichtlich einer Aufhängungseigenschaft verändern zu können, um eine kontinuierliche Änderung der Ausrichtung des Ausbringgestänges zu bewirken. Dabei erfolgt die kontinuierliche Änderung langsamer als die Selbststabilisierung der passiven Aufhängung.

Aufgabe der Erfindung ist eine Vorrichtung zum Ausbringen von flüssigen und/oder festen Wirkstoffen mit einem Trägerfahrzeug und mindestens einem zumindest um eine vorzugsweise parallel zu einer Längsachse des Trägerfahrzeugs verlaufende Drehachse schwenkbar angeordneten Gestänge mit beidseits des Trägerfahrzeugs abstehenden Auslegern, wie beispielsweise eine Feldspritze, zu entwickeln, welche auch bei unebenen Böden und sich bewegendem oder wankendem Trägerfahrzeug eine möglichst exakte Beibehaltung der Abstände der Ausleger gegenüber der Bodenoberfläche ermöglicht, sowie ein Verfahren zur Steuerung einer solchen Vorrichtung anzugeben, mit dessen Hilfe auch bei unebenen Böden und sich bewegendem oder wankendem Trägerfahrzeug eine möglichst exakte Beibehaltung der Abstände der Ausleger gegenüber der Bodenoberfläche ermöglicht wird.

Die Aufgabe wird jeweils gelöst durch die Merkmale der unabhängigen Ansprüche.

Merkmale vorteilhafter Weiterbildungen der Erfindung ergeben sich aus den abhängigen Ansprüchen, dem nachfolgenden allgemeinen Beschreibungsteil, der Zeichnungen sowie dem zugehörigen Figurenbeschreibungsteil.

Ein erster Gegenstand der Erfindung betrifft demnach eine Vorrichtung zum Ausbringen von flüssigen und/oder festen Wirkstoffen. Die Vorrichtung umfasst:
- ein Trägerfahrzeug,
- mindestens ein zumindest um eine Drehachse schwenkbar angeordnetes Gestänge,
- mindestens eine Sensoranordnung zur Erfassung einer Drehgeschwindigkeit und/oder einer Drehlage des Gestänges um die Drehachse in Bezug auf eine Referenzebene,
- eine Ausgangssignale der Sensoranordnungen zu Steuerungssignalen verarbeitende Regelungseinrichtung,
- wenigstens einen in Abhängigkeit von Steuerungssignalen der Regelungseinrichtung die momentane Drehlage des Gestänges um die Drehachse beeinflussenden Aktor,
- welcher wenigstens eine Aktor durch wenigstens einen mit elektromotorisch und/oder elektromagnetisch arbeitenden Linear- oder Drehantrieb gebildet ist, der eine Stellverbindung zwischen dem Trägerfahrzeug und dem schwenkbaren Gestänge herstellt, wobei der wenigstens eine Linear- oder Drehantrieb für jede der beiden Verstellrichtungen des Gestänges jeweils eine mit elektromagnetischer oder mit elektromotorischer Antriebskraft beaufschlagbare aktive Druckseite aufweist,
wobei bei gegenüber dem Trägerfahrzeug ruhendem oder sich geringfügig bewegendem Gestänge ein ungefähr gleiches Kraftniveau in den aktiven Antriebsseiten zweier gegensinnig arbeitender Linear- oder Drehantriebe bzw. eines doppelt wirkenden Linear- oder Drehantriebs herrscht, und wobei bei gegenüber dem Trägerfahrzeug verstelltem Gestänge eine definierte Differenzkraft zwischen den aktiven Antriebsseiten der beiden gegensinnig arbeitenden Linear- oder Drehantriebe bzw. des doppelt wirkenden Linear- oder Drehantriebs einstellbar ist.

Bei der Erfindung ist vorgesehen, dass die ein Trägerfahrzeug umfassende Vorrichtung mit dem schwenkbaren Gestänge und der Sensoranordnung einen elektromotorisch betriebenen Aktor bzw. Antrieb oder mehrere elektromotorisch betriebene Aktoren oder Antriebe aufweist, der/die jeweils eine Stellverbindung zwischen dem Trägerfahrzeug und dem schwenkbaren Gestänge herstellen, wobei der wenigstens eine elektrische oder elektromotorisch betriebene Linearantrieb oder Drehantrieb für jede der beiden Verstellrichtungen des Gestänges jeweils eine elektromotorisch beaufschlagbare aktive Stellseite aufweist. Anstelle von bekannten Stellelementen, die mit Pneumatikzylindern oder Hydraulikzylindern arbeiten, sieht die vorliegende Erfindung Stellelemente vor, die bspw. durch Elektromagnetische Antriebe oder durch Linearelektromagnete oder auch durch andere elektromotorische Antriebe gebildet sein können. Diese Antriebsvarianten haben neben der relativ hohen Leistungsdichte und der realisierbaren hohen Stellgeschwindigkeiten den Vorteil, dass über die an den elektromotorischen oder elektromagnetischen Antrieben angelegte Stromstärke die benötigte Stellkraft bzw. das eingeleitete Drehmoment besonders exakt eingestellt werden kann. Eine geeignete Steuereinheit kann dafür sorgen, dass die eingeleitete Kraft bzw. das eingeleitete Drehmoment sehr exakt geregelt werden kann.

Bei der erfindungsgemäßen Vorrichtung wird vorzugsweise ein Zusammenhang zwischen den gemessenen Drehwinkeln bzw. der Drehlage des Gestänges und der Drehgeschwindigkeit hergestellt, indem ein Messwert der als Drehgeschwindigkeit bezeichneten Drehrate zeitlich integriert wird, woraus sich ein die Drehlage des Gestänges in Bezug auf die Referenzebene repräsentierender Drehwinkel ermitteln lässt. Störungen durch Bewegungen des Trägerfahrzeuges oder durch translatorische Beschleunigungen aller Art haben hierbei keinen Einfluss auf die Berechnung, wogegen Messfehler ebenfalls integriert werden und eine Winkeldrift des Drehwinkels verursachen. Eine Messung der Drehlage in Bezug auf die Referenzebene, beispielsweise durch eine Messung der Relativdrehung zwischen Trägerfahrzeug und Gestänge oder eine Messung eines Neigungswinkels zur Erdbeschleunigung weist zwar den Nachteil des Einflusses von Störungen durch Drehbewegungen des Trägerfahrzeuges oder durch translatorische Beschleunigungen, wie sie etwa bei Kurvenfahrt auftreten auf, dem jedoch der Vorteil gegenübersteht, dass diese Art der Erfassung der Drehlage keiner Winkeldrift unterliegt.

Diese Messwerte können am sinnvollsten dadurch gewonnen werden, dass bei der erfindungsgemäßen Vorrichtung die mindestens eine Sensoranordnung zur Erfassung der Drehgeschwindigkeit und/oder Drehlage des Gestänges um die Drehachse in Bezug auf die Referenzebene durch mindestens einen am Gestänge angeordneten Drehraten-, Drehwinkelgeschwindigkeits- und/oder Drehbeschleunigungssensor gebildet ist. Wahlweise kann die Sensoranordnung auch am Trägerfahrzeug angebracht sein. Auch die Verwendung von zwei solchen Sensoranordnungen am Gestänge und am Trägerfahrzeug ist denkbar.

Die erfindungsgemäße Vorrichtung kann vorsehen, dass das Spritzgestänge an einem Widerlagerteil pendelnd um eine Achse gelagert ist, wobei ein Drehratensensor (Gyroskop) direkt auf dem und/oder am Spritzgestänge und/oder am Trägerfahrzeug montiert ist. Mit dem Gyroskop bzw. der erwähnten Sensoranordnung werden die aktuelle Lage und die aktuellen Bewegungen des Gestänges in Bezug auf eine Referenzebene ("künstlicher Horizont"), die unabhängig vom Trägerfahrzeug sind, ermittelt. Damit kann erreicht werden, dass Drehbewegungen oder Wankbewegungen des Trägerfahrzeuges (Selbstfahrende- oder gezogene Feldspritze) zunächst keinen direkten Einfluss auf das Gestänge haben, da die durch das Gyroskop ermittelten Messwerte sich auf die Drehbewegungen des Gestänges in Bezug auf die Erdoberfläche beziehen. Die Sensoranordnung gewinnt auf diese Weise absolute Lagewerte, die sich hervorragend dazu eignen, unerwünschte Pendel- und/oder Auslenkbewegungen des Gestänges zu erfassen und entweder auszugleichen oder zu dämpfen.

Der wenigstens eine Aktor kann bspw. durch wenigstens einen doppelt wirkenden, elektromotorisch oder auch mit einem doppelt wirkenden, elektromagnetisch arbeitenden Linearantrieb gebildet sein, der eine Stellverbindung zwischen dem Trägerfahrzeug und dem schwenkbaren Gestänge herstellt. Hierbei trennt ein mit dem Gestänge gekoppelter, zwischen zwei Endlagen beweglicher Stellantrieb des Linearantriebs zwei Stellseiten voneinander, welche für jede der beiden Verstellrichtungen des Gestänges jeweils mit elektromotorischer oder elektromagnetischer Stellkraft beaufschlagbar sind. An diesen beiden Stellseiten liegt bei gegenüber dem Trägerfahrzeug ruhendem oder sich geringfügig bewegendem Gestänge ein ungefähr gleiches Kraftniveau an, was vorzugsweise mittels geeigneter Sensoren erfasst und in der Regelschaltung ausgewertet wird, zusammen mit den Messwerten der Sensoranordnung bzw. des Drehratensensors oder Gyroskops. Soll sich das Gestänge dagegen relativ zum Trägerfahrzeug bewegen, wird der doppelt wirkende Stellantrieb mit Stellkraft beaufschlagt, so dass bei gegenüber dem Trägerfahrzeug verstelltem oder zu verstellendem Gestänge eine definierte Differenzkraft zwischen den beiden Stellseiten des doppelt wirkenden Linearantriebs einstellbar ist. Die herrschenden Stellkräfte bzw. die aufzubringenden Stellkräfte können bei derartigen elektromotorischen oder elektromagnetischen Antrieben vorteilhafterweise mittels einer Auswertung der für die Antriebe erforderlichen Stromverläufe erfasst werden. Da sich die Stromaufnahme jeweils mit den Gegenkräften, die im System herrschen, ändert, lassen sich aus der Auswertung des Stromverlaufs sehr genaue Aussagen über die jeweiligen Stellkräfte gewinnen.

Die vorgeschlagene Spritzgestängeregelung bei pendelnden Aufhängungen kann somit bspw. mit wenigstens einem elektromotorischen oder elektromagnetischen Stellantrieb erfolgen, mit dem jeweils das Spritzgestänge in Bezug auf den Pendelweg verstellt werden kann. Der Stellantrieb ist zum einen mit dem Spritzgestänge verbunden und zum anderen mit dem Widerlagerteil. Das Widerlagerteil kann auch Teil eines Fahrzeugs, beispielsweise ein Rahmenteil einer Pflanzenschutzspritze sein.

Eine alternative Ausführungsvariante der erfindungsgemäßen Vorrichtung kann vorsehen, dass der erwähnte Aktor durch wenigstens zwei gegensinnig und jeweils mit elektromotorischer oder elektromagnetischer Antriebskraft arbeitende Linearantriebe gebildet ist, die eine Stellverbindung zwischen dem Trägerfahrzeug und dem schwenkbaren Gestänge herstellen, wobei jeder der beiden Linearantriebe jeweils eine Stellseite aufweist, und wobei jeweils einer der beiden Linearantriebe für eine vorgegebene Verstellrichtung des Gestänges mit elektromotorischer oder elektromagnetischer Antriebskraft beaufschlagbar ist. Auch bei dieser Variante herrscht an den beiden Stellseiten der beiden Linearantriebe bei gegenüber dem Trägerfahrzeug ruhendem oder sich geringfügig bewegendem Gestänge ein ungefähr gleiches Kraftniveau. Dagegen ist bei gegenüber dem Trägerfahrzeug verstelltem oder zu verstellendem Gestänge eine definierte Differenzkraft zwischen den beiden Stellseiten der beiden Linearantriebe einstellbar.

Die genannten Antriebe, d.h. der wenigstens eine doppelt wirkende Stellantrieb oder die wenigstens zwei bspw. einfach wirkenden Stellantriebe werden elektromotorisch oder auch elektromagnetisch betrieben. Es sei an dieser Stelle darauf hingewiesen, dass sich dieselben Prinzipien auch auf Drehantriebe (einseitig oder doppelt wirkend) übertragen lassen, so dass die genannten Varianten in entsprechender Weise auf elektromotorische oder elektromagnetische Drehantriebe zu lesen sind und verstanden werden sollen.

So sieht die alternative Variante der erfindungsgemäßen Vorrichtung vor, dass der der wenigstens eine Aktor durch wenigstens einen doppelt wirkenden, elektromotorisch oder elektromagnetisch arbeitenden Linearantrieb gebildet ist, der eine Stellverbindung zwischen dem Trägerfahrzeug und dem schwenkbaren Gestänge herstellt, wobei ein mit einem Gestänge gekoppelter, zwischen zwei Endlagen beweglicher Abschnitt des Linearantriebs zwei Stellseiten aufweist, welche für jede der beiden Verstellrichtungen des Gestänges jeweils mit elektromotorischer oder elektromagnetischer Stellkraft beaufschlagbar sind. Hierbei liegt an beiden Stellseiten bei gegenüber dem Trägerfahrzeug ruhendem oder sich geringfügig bewegendem Gestänge ein ungefähr gleiches Kraftniveau an. Ebenso ist bei gegenüber dem Trägerfahrzeug verstelltem Gestänge eine definierte Differenzkraft zwischen den beiden Stellseiten des doppelt wirkenden Stellantriebs einstellbar.

Außerdem kann die Vorrichtung dergestalt ausgestattet sein, dass der Aktor durch wenigstens zwei gegensinnig und jeweils elektromotorisch oder elektromagnetisch arbeitende Linearantriebe gebildet ist, die eine Stellverbindung zwischen dem Trägerfahrzeug und dem schwenkbaren Gestänge herstellen, wobei jeder der beiden Linearantriebe jeweils eine Stell- oder Antriebsseite aufweist, und wobei jeweils einer der beiden Linearantriebe für eine vorgegebene Verstellrichtung des Gestänges mit elektromotorisch oder elektromagnetisch erzeugter Antriebskraft beaufschlagbar ist. An beiden Stellseiten der beiden Linearantriebe liegt bei gegenüber dem Trägerfahrzeug ruhendem oder sich geringfügig bewegendem Gestänge ein ungefähr gleiches Kraftniveau an. Bei gegenüber dem Trägerfahrzeug verstelltem Gestänge ist eine definierte Differenzkraft zwischen den beiden Stellseiten oder Antriebsseiten der beiden Linearantriebe einstellbar.

Wenn in diesem Zusammenhang von elektromotorischen oder elektromagnetischen Antrieben für die Aktoren die Rede ist, so sind damit generell auch Elektromotoren mit umfasst, die über Hebelmechanismen auf das Spritzgestänge einwirken und dieses beweglich ansteuern. Auch bei diesen Varianten kann vorgesehen sein, dass über die an den elektromotorischen Antrieben angelegte Stromstärke die benötigte Stellkraft bzw. das eingeleitete Drehmoment besonders exakt eingestellt werden kann. Eine geeignete Steuereinheit kann dafür sorgen, dass die eingeleitete Kraft bzw. das eingeleitete Drehmoment sehr exakt geregelt werden kann.

Als wesentliche Unterschiede der erfindungsgemäßen Vorrichtung zum Ausbringen von flüssigen und/oder festen Wirkstoffen gegenüber der bekannten Spritzvorrichtung können insbesondere die folgenden Aspekte genannt werden:
Die Erfindung liefert ein Spritzgestänge, welches drehbar oder pendelnd, um eine Drehachse annähernd parallel zur Fahrzeugachse an einem Tragerahmen aufgehängt ist. Zusätzlich ist zwischen dem Spritzgestänge und dem Tragerahmen wenigstens ein, vorzugsweise elektromotorisches Stellelement (evtl. auch elektromagnetisch) angeordnet. Die an den Stellelementen anliegenden Kräfte bzw. die für die elektromotorischen oder elektromagnetischen Antriebe erforderlichen Stromstärken werden erfasst bzw. geregelt. Alternativ hierzu können auch Dehnungsmessstreifen auf den Kolbenstangen oder an Verbindungsstellen o. dgl. eingesetzt werden.

In Phasen, in denen keine Verstellung des Gestänges notwendig ist, wird die resultierende Differenzkraft ungefähr auf Null geregelt, wodurch keine oder keine nennenswerte Kraft in das Gestänge eingeleitet wird. Ist dagegen aufgrund der Fahrsituation der Vorrichtung, bspw. in unebenem Gelände oder am Hang, eine Verstellung des Gestänges um seine Drehachse notwendig, wird auf eine definierte Differenzkraft-geregelt. Die Ermittlung der Drehgeschwindigkeit kann insbesondere über das Gyroskop erfolgen. Durch Integration der Drehgeschwindigkeit kann der Verdrehwinkel errechnet werden.

Darüber hinaus werden geringe Dreh- bzw. Wankbewegungen zunächst nicht aktiv nachgeregelt, wobei hierbei die Dämpfung des Gestänges durch entsprechende Elastizitäten in dem wenigstens einen Stellantrieb erfolgen kann. Wahlweise kann die Verbindung zwischen Zylinder und Gestänge auch mittels eines Elastomers oder mit einem Langloch mit zugeordneter Feder oder Dämpfungselement erfolgen.

Alternativ zu zwei Stellantrieben kann auch ein doppelt wirkender Zylinder oder Antrieb eingesetzt werden, beispielsweise ein elektromotorisch arbeitender Antrieb.

Alternativ zur Differenzdruckmessung wäre auch vorstellbar, den wenigstens einen Antrieb mit einem Wegmesssystem zu versehen, so dass Bewegungen des Gestänges nicht über eine Differenzkraft, sondern über eine Längenänderung des Stellelementes ermittelt werden können. Überschreitet diese Längenänderung einen definierten Wert, kann das Gestänge wieder aktiv nachgeregelt werden, bzw. wird das Gestänge aufgrund der durch das Gyroskop vorgegebenen Werte auf eine bestimmte Länge Stellelementes geregelt.

Eine weitere Alternative zur Differenzkraftmessung wäre die Verwendung von wenigstens einem Dehnungsmessstreifen, welcher bspw. auf die Kolbenstange des wenigstens einen Stellelementes montiert wird. Findet keine Bewegung durch das Spritzgestänge statt, bzw. ist keine aktive Regelung erforderlich, wird vom Dehnungsmessstreifen keine bzw. nur eine geringe Zug- und/oder Druckkraft ermittelt. Wird eine definierte Zug- oder Druckkraft überschritten, kann das Gestänge wieder aktiv nachgeregelt werden, bzw. wird das Gestänge aufgrund der durch das Gyroskop vorgegebenen Werte auf eine bestimmte Zug- und/oder Druckkraft geregelt.

Zur Lösung der obigen Aufgabe schlägt die vorliegende Erfindung neben der oben beschriebenen Vorrichtung zum Ausbringen von festen und/oder flüssigen Wirkstoffen zudem ein Verfahren mit den Merkmalen des unabhängigen Anspruchs 10 vor. Dieses erfindungsgemäße Verfahren dient insbesondere der Steuerung einer Vorrichtung gemäß einer der zuvor beschriebenen Ausführungsvarianten und sieht eine Regelung der Drehlage des um eine Drehachse beweglich am Trägerfahrzeug angeordneten Gestänges vor, und zwar eine Regelung in Abhängigkeit von einer momentanen Drehlage und/oder einer gemessenen Differenzkraft an wenigstens zwei Stellseiten eines elektromotorisch oder elektromagnetisch betriebenen Aktors,
- wobei eine Differenzkraft bei ruhendem oder nur geringfügig aus einer Ruhelage bewegtem Gestänge minimal ist und der Aktor keine oder nur eine minimale Stellkraft zwischen Trägerfahrzeug und Gestänge aufbaut,
- und wobei bei einem zu verstellenden Gestänge eine definierbare Differenzkraft zwischen den beiden Stellseiten aufgebaut wird,
- wobei eine aktuelle Drehgeschwindigkeit und/oder Drehlage des Gestänges um die Drehachse in Bezug auf eine Referenzebene mittels mindestens einer Sensoranordnung ermittelt wird,
- die einen am Gestänge oder am Trägerfahrzeug angeordneten Drehraten-, Drehwinkelgeschwindigkeits- und/oder Drehbeschleunigungssensor umfasst.

Bei einer Variante des Verfahrens werden sowohl die Messdaten der wenigstens einen Sensoranordnung als auch die Differenzkräfte zwischen den beiden Stellseiten des wenigstens einen Aktors zur Ermittlung einer aktuellen Drehlage und/oder einer Soll-Drehlage zwischen Gestänge und Trägerfahrzeug herangezogen und von einer Regelungseinrichtung verarbeitet, welche auf Basis dieser Messdaten den wenigstens einen Aktor ansteuert, der die Gestängelage in der gewünschten Weise ändert, so dass das Gestänge insbesondere seine horizontale Lage bei ebenem Untergrund bzw. seine Parallellage zu einem geneigten Untergrund beibehält bzw. einnimmt.

Ergänzend sei an dieser Stelle darauf hingewiesen, dass es sich bei der erfindungsgemäßen Verteilvorrichtung vorzugsweise um eine landwirtschaftliche Verteilmaschine handeln kann, insbesondere einer Feldspritze zum Ausbringen von flüssigen Pflanzenschutz- und oder Düngemitteln, ggf. auch von festen Wirkstoffen, die bspw. in zerstäubter Form ausgebracht werden können. Die Feldspritze kann bspw. als selbstfahrende oder als eine an einem Zugfahrzeug angebrachte bzw. angehängte Maschine ausgebildet sein. Die Feldspritze besteht normalerweise im Wesentlichen aus einem Rahmen zum Tragen der einzelnen Baugruppen, einem Vorratsbehälter, zum Mitführen der auszubringenden Spritzflüssigkeit, einer Rechnereinheit zum Steuern der einzelnen Maschinenelemente, sowie aus einem gegenüber dem Rahmen, mittels Stellelementen höhenverstellbaren und um eine horizontale Längsachse verdrehbaren, sich quer zur Fahrrichtung erstreckenden Verteilvorrichtung bzw. Spritzgestänge. An der Verteilvorrichtung sind in regelmäßigen Abständen voneinander mehrere sog. Düsenstöcke angebracht. An diesen ist wiederum jeweils wenigstens eine Spritzdüse, in der Regel jedoch mehrere Spritzdüsen zum Verteilen der Pflanzenschutz- und/oder Düngerflüssigkeit montiert. Die Spritzdüsen erzeugen hierzu einen zum Pflanzenbestand hingerichteten Sprühkegel. Die Ansteuerung der Stellelemente zur Höheneinstellung sowie zur Ansteuerung der gewünschten Düsenstöcke bzw. Spritzdüsen erfolgt bspw. mittels in einem Rechnersystem hinterlegter Ausbringmuster bzw. Ausbringprofile.

Zur Erfassung der Drehgeschwindigkeit kann bei der erfindungsgemäßen Vorrichtung vorzugsweise ein geeigneter Drehratensensor oder auch mehrere Drehratensensoren eingesetzt werden, der/die direkt auf dem Gestänge montiert ist. Drehbewegungen des Trägerfahrzeuges haben somit keinen Einfluss auf die Bestimmung der Drehgeschwindigkeit des Gestänges. Ein der Messgröße proportionales oder diese wiederspiegelndes Ausgangssignal eines Drehratensensors entspricht somit der Drehbewegung des Gestänges bezogen auf eine beliebige Referenzebene, beispielsweise bezogen auf die Erdoberfläche oder eine ein gemitteltes Bodenprofil wiederspiegelnde, langfristige Ausrichtung des Trägerfahrzeugs.

Diese Messgröße bzw. ein dieser Messgröße proportionales oder diese wiederspiegelndes, in die Steuerungssignale an den oder die Aktoren einfließende Eingangsgröße der Regelungseinrichtung dienendes Ausgangssignal eines Drehgeschwindigkeiten des Gestänges erfassenden Drehratensensors kann verwendet werden, um einen aktive Dämpfung des Gestänges in Form eines aktiv eingeleiteten Bremsmoments zu erhalten.

Alternativ oder zusätzlich kann die mindestens eine Sensoranordnung zur Erfassung einer Drehgeschwindigkeit des Gestänges um die Drehachse in Bezug auf eine Referenzebene mindestens einen am Trägerfahrzeug angeordneten Drehratensensor umfassen, um Drehgeschwindigkeiten des Trägerfahrzeugs wenigstens um dessen Längsachse und damit Störbewegungen darstellende Drehbewegungen des Trägerfahrzeugs zu messen. D.h. es kann wahlweise auch am Trägerfahrzeug ein zusätzlicher Drehratensensor eingesetzt werden, was einen Vergleich der Messwerte zur noch besseren Lage- und/oder Winkelbestimmung des Gestänges ermöglicht.

Zusätzlich kann die mindestens eine Sensoranordnung zur Erfassung einer Drehgeschwindigkeit des Gestänges um die Drehachse in Bezug auf eine Referenzebene hierbei mindestens einen die Relativdrehung zwischen Trägerfahrzeug und Gestänge erfassenden Drehwinkelsensor oder Drehwinkelgeschwindkeitssensor umfassen, so dass aus den beiden Messwerten Drehgeschwindigkeit des Trägerfahrzeugs in Bezug auf dessen Längsachse sowie Relativdrehung zwischen Trägerfahrzeug und Gestänge dann die absolute Drehgeschwindigkeit des Gestänges um die Drehachse ermittelt werden kann.

Alternativ oder zusätzlich zu einem Drehratensensor kann die mindestens eine Sensoranordnung zur Erfassung einer Drehgeschwindigkeit des Gestänges um die Drehachse in Bezug auf eine Referenzebene einen Drehbeschleunigungssensor umfassen. Durch zeitliche Integration dessen Ausgangssignals kann ein Maß für die Drehgeschwindigkeit gewonnen werden.

Zusammengefasst ist demnach ersichtlich, dass die Mittel zur Bestimmung einer Drehgeschwindigkeit des Gestänges um die Drehachse in Bezug auf eine Referenzebene einen oder mehrere am Gestänge angeordnete Inertialsensoren umfassen können.

Inertialsensoren dienen der Messung von Beschleunigungen und Drehraten. Durch Kombination mehrerer Inertialsensoren in einer auch als inertial measurement unit, IMU, bezeichneten inertialen Messeinheit können Beschleunigungen in bis zu sechs Freiheitsgraden, die ein starrer Körper aufweisen kann (drei translatorische und drei rotatorische Freiheitsgrade) gemessen werden. Eine IMU ist Hauptbestandteil eines auch als inertiales Navigationssystem bezeichneten Trägheitsnavigationssystems.

Beispiele für Inertialsensoren sind Beschleunigungssensoren und Drehratensensoren.

Ein Drehratensensor erfasst die Rotations- beziehungsweise Drehgeschwindigkeit eines Körpers um eine vorgegebene Dreh- oder Schwenkachse, wobei ein Ausgangssignal eines Drehratensensors einer erfassten Drehgeschwindigkeit vorzugsweise eindeutig proportional ist.

Durch Integration der Drehgeschwindigkeit über ein Zeitintervall lässt sich daraus ableiten, um welchen Winkel sich ein Körper innerhalb des Zeitintervalls gedreht hat. Die Drehraten um die drei Raumachsen werden als:
- Gierrate (Drehung um Hochachse, engl. yaw)
- Nickrate (Drehung um Querachse, engl. pitch)
- Wankrate (bei nicht landgestützten Fahrzeugen auch Rollrate (Drehung um Längsachse, engl. roll)
bezeichnet.

Das Messprinzip basiert im Wesentlichen auf zwei Messprinzipien, zum Einen der Corioliskraft, die auf ein mechanisch bewegtes System wirkt, und zum Anderen dem Sagnac-Effekt, der bei Licht beobachtet wird.

Beispiele für die Corioliskraft nutzende mechanische, bewegte Systeme sind:
- Focaultsches Pendel,
- Kreisekompass
- Dynamically Tuned Gyro (DTG), Messfehler <1 °/h
- Vibrationskreisel, Messfehler <10°/h
- Schwingkölbchen.

Beispiele für den Sagnac-Effekt nutzende optische Systeme sind:
- Ringlaser (RLG), Messfehler <0,001°/h
- Faserkreisel (FOG), Messfehler <1°/h

Inertiale Messeinheiten beinhalten in der Regel die folgenden Sensorarten:
- Drei orthogonal angeordnete Beschleunigungssensoren (auch als Translationssensoren bezeichnet) detektieren die lineare Beschleunigung in x- bzw. y-bzw. z-Achse. Daraus kann mit zweimaliger Integration die translatorische Bewegung berechnet werden.
- Drei orthogonal angeordnete Drehratensensoren (auch als Gyroskopische Sensoren bezeichnet) messen die Winkelgeschwindigkeit um die x- bzw. y- bzw. z-Achse. Daraus kann mit einfacher Integration die Rotationsbewegung berechnet werden.

Zur Bestimmung der Integrationskonstanten und/oder zur Verbesserung der Genauigkeit und/oder um eine Drift der Sensoren zu korrigieren, können zusätzlich beispielsweise Magnetfeldsensoren, wie etwa Kompasssensoren, und/oder zum Empfang von Signalen eines auch als Global Navigation Satellite System, GNSS, bezeichneten, bestehenden und/oder künftigen globalen Navigationssatellitensystems, wie beispielsweise:
- GPS (Global Positioning System) der Vereinigten Staaten von Amerika, und/oder
- GLONASS (GLObal NAvigation Satellite System) der Russischen Föderation, und/oder
- Galileo der Europäischen Union, und/oder
- Beidou der Volksrepublik China
vorgesehen sein.

Die mindestens eine Sensoranordnung zur Erfassung einer Drehlage des Gestänges um die Drehachse in Bezug auf die Referenzebene kann mindestens einen eine Relativdrehung zwischen Trägerfahrzeug und Gestänge bezogen auf die Drehachse erfassenden Sensor umfassen.

Wenigstens ein Sensor zur Erfassung einer Relativdrehung zwischen Trägerfahrzeug und Gestänge kann ein zwischen dem Gestänge und dem Trägerfahrzeug angeordneter Drehwinkelsensor sein.

Alternativ oder zusätzlich kann eine Erfassung einer Relativdrehung zwischen Trägerfahrzeug und Gestänge anhand wenigstens eines einen Winkel zwischen dem Trägerfahrzeug und der Referenzebene erfassenden Neigungssensors und anhand zumindest eines einen Winkel zwischen dem Gestänge und der Referenzebene erfassenden Neigungssensors verwirklicht sein, wobei die Differenz des von den Sensoren erfassten Winkels zwischen dem Trägerfahrzeug und der Referenzebene und des Winkels zwischen dem Gestänge und der Referenzebene einer Relativdrehung zwischen Trägerfahrzeug und Gestänge proportional ist.

Die Erfindung erlaubt eine sehr exakte Bestimmung einer momentanen Drehlage des Gestänges bezogen auf eine Referenzebene. Dies ist im Vergleich zu einer Bestimmung der Drehlage anhand mehrerer Ultraschallsensoren weniger aufwendig und kostenintensiv.

Die Vorrichtung kann zusätzlich einen in Abhängigkeit von Steuerungssignalen der Regelungseinrichtung einen mittleren Abstand des Gestänges gegenüber dem Boden oder dem Bestand beeinflussenden Aktor beispielsweise in Form eines oder mehrerer Hydraulikzylinder umfassen, welcher Steuerungssignale in mechanische Bewegung oder eine andere physikalische Größe, wie beispielsweise Druck umsetzt, und damit eine das Gestänge anhebende oder absenkende Kraft auf das Gestänge ausübt. Wahlweise können anstelle dieser Hydraulikzylinder auch elektromotorische Antriebe zum Heben und Senken des Gestänges eingesetzt werden.

Darüber hinaus kann die Vorrichtung mindestens eine Sensoranordnung zur Erfassung wenigstens eines mittleren Abstands des Gestänges gegenüber dem Boden oder dem Bestand umfassen. Vorzugsweise umfasst eine solche Sensoranordnung wenigstens einen an einem Ende eines Auslegers des Gestänges angeordneten Abstandssensor. Mittels dieses Abstandssensors und einer entsprechenden Berücksichtigung dessen Ausgangssignale bei der Erzeugung von Steuerungssignalen vermittels der Regelungseinrichtung kann die Zuverlässigkeit gesteigert werden, mit der verhindert werden kann, dass das Gestänge oder hieran angeordnete Ausbringungsmittel für feste und/oder flüssige Wirkstoffe, wie beispielsweise Spritzdüsen, in Bodenkontakt und/oder in Kontakt mit dem Bestand kommen.

Alternativ oder zusätzlich kann eine solche Sensoranordnung wenigstens einen am das Trägerfahrzeug in dessen Breite nicht überragenden Teil des Gestänges angeordneten Abstandssensor umfassen.

Anhand der Abstandssignale der Sensoren kann die Regelungseinrichtung zumindest für den mindestens einen mittleren Abstand des Gestänges gegenüber dem Boden oder dem Bestand beeinflussenden Aktor vorgesehene Steuerungssignale erzeugen.

Um Einflüsse ungleicher Masseverteilungen des Gestänges möglichst auszuschließen verläuft die Drehachse vorzugsweise durch den Schwerpunkt des Gestänges.

Das mindestens eine Gestänge kann dauerhaft oder gegen eine andere Einrichtung zur landwirtschaftlichen Boden- und/oder Bestandsbehandlung auswechselbar an dem Trägerfahrzeug angeordnet sein.

Das Trägerfahrzeug kann hierbei angetrieben oder gezogen sein, so dass die Vorrichtung:
- im Falle eines angetriebenen Trägerfahrzeugs mit dauerhaft angeordnetem Gestänge ein selbstfahrendes landwirtschaftliches Gerät beziehungsweise ein landwirtschaftliches Selbstfahrgerät bildet,
- im Falle eines gezogenen Trägerfahrzeugs mit dauerhaft angeordnetem Gestänge ein gezogenes landwirtschaftliches Gerät, wie beispielsweise einen landwirtschaftlichen Anhänger, bildet, und
- im Falle eines angetriebenen Trägerfahrzeugs mit gegen eine andere Einrichtung zur landwirtschaftlichen Boden- und/oder Bestandsbehandlung beispielsweise an einem Dreipunkt-Kraftheber oder auf einer hierfür vorgesehenen Ladefläche auswechselbar angeordnetem Gestänge entweder ein Anbaugerät, oder ein Aufbaugerät bildet.

Zusätzliche Vorteile zu den bereits genannten Vorteilen gegenüber dem Stand der Technik ergeben sich durch eine vollständige Lösung der gestellten Aufgabe unter Behebung sämtlicher Nachteile des Standes der Technik.

Zudem wird durch die exakte Einhaltung der Abstände der Ausleger gegenüber der Bodenoberfläche und/oder dem Bestand unabhängig von dem sich bewegenden und/oder wankenden Trägerfahrzeug zuverlässig vermieden, dass die Ausleger in Bodenkontakt kommen.

Alle die erwähnten Messdaten, die von den Beschleunigungssensoren und/oder den Gyroskopen o. dgl. Messanordnungen geliefert werden, werden vorzugsweise mit den Druck-, Kraft- und/oder Dehnungsmesswerten des wenigstens einen Stellelements abgeglichen, das zwischen Gestänge und Trägerfahrzeug angeordnet ist, und das im Falle eines ruhenden Gestänges vorzugsweise keinen Differenzdruck bzw. keine oder nur geringe Kraftwerte liefert.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante einer landwirtschaftlichen Verteilvorrichtung, gebildet aus einem landwirtschaftlichen Trägerfahrzeug, das mit einem Spritzgestänge ausgestattet ist.
Fig. 2 zeigt eine Detailansicht einer Aufhängung des Gestänges am Trägerfahrzeug.
Fig. 3 zeigt eine weitere schematische Detailansicht der Aufhängung des Gestänges am Trägerfahrzeug.
Fig. 4 zeigt ein schematisches Blockschaltbild mit den wichtigsten Komponenten zur Verstellung des am Trägerfahrzeug angelenkten Gestänges.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

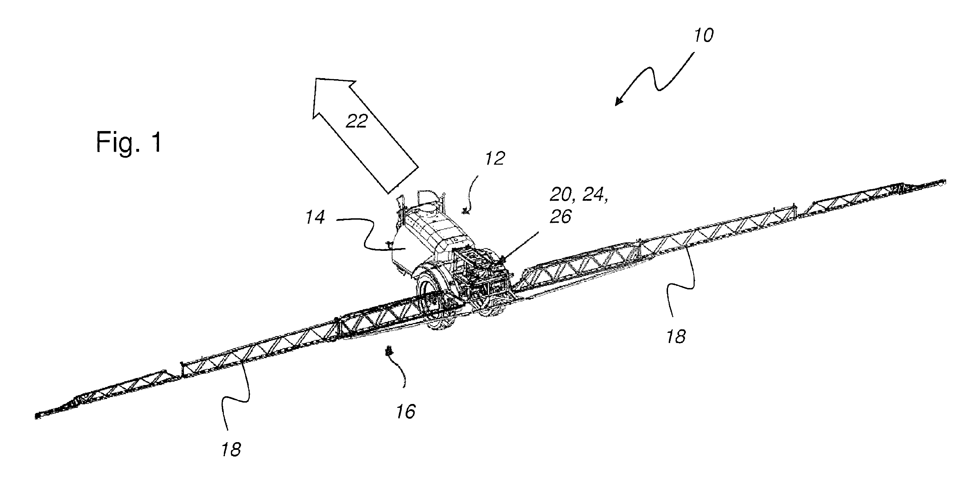

Die schematische Perspektivansicht der Fig. 1 zeigt eine denkbare Ausführungsvariante einer landwirtschaftlichen Verteilvorrichtung 10, gebildet aus einem gezogenen landwirtschaftlichen Trägerfahrzeug 12 mit einem Tank 14 für eine Ausbringflüssigkeit und mit einem heckseitig aufgehängten Spritzgestänge 16, das zwei symmetrisch ausgebildete Auslegerarme 18 aufweist, die mit hier nicht erkennbaren Düsenstöcken und darin integrierten Spritzdüsen für die Zerstäubung der Ausbringflüssigkeit, bspw. des Spritzmittels ausgestattet ist. Die Aufhängung 20 des Spritzgestänges 16 am Rahmen ermöglicht einerseits die Verdrehung des Gestänges 16 um eine horizontale Längsachse, die parallel zur Fahrtrichtung 22 ausgerichtet ist, und erlaubt andererseits dessen horizontale Ausrichtung bzw. parallele Ausrichtung zur Bodenoberfläche, wenn sich die Aufhängung 20 verdreht oder in sonstiger Weise bewegt, insbesondere aufgrund von Bodenunebenheiten, unebenem Gelände etc.

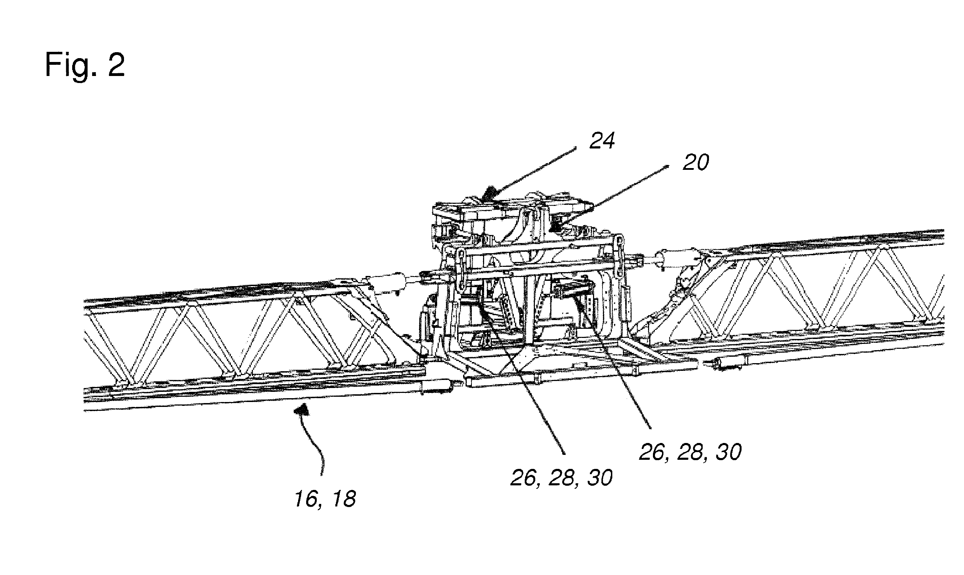

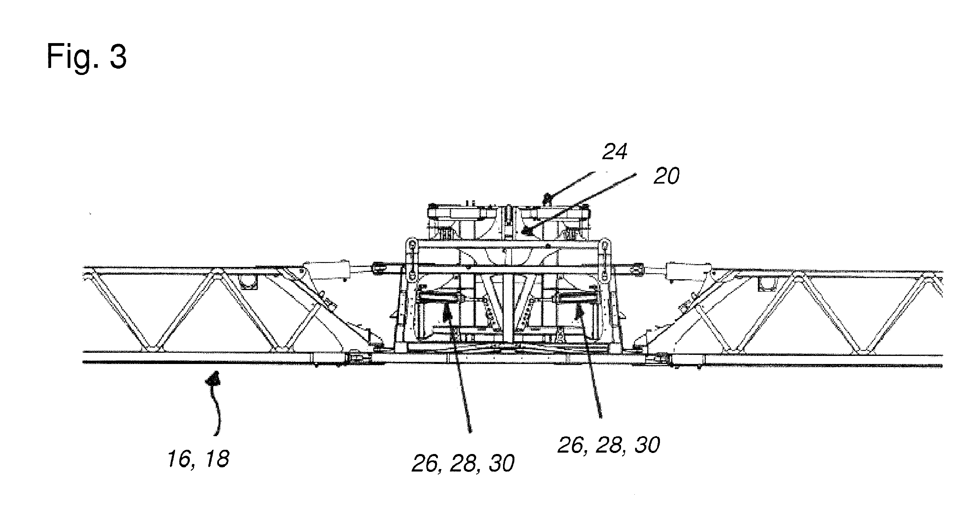

Wie es die Detailansichten der Fig. 2 und der Fig. 3 zeigen, ist das pendelnd bzw. drehbar um die Drehachse (parallel zur Fahrtrichtung 22) an der Aufhängung 20 am Trägerrahmen 24 des Trägerfahrzeugs 12 aufgehängte Gestänge 16 mit pneumatischen oder hydraulischen elektromotorisch oder elektromagnetisch betätigten Stellelementen 26 mit dem Trägerrahmen 24 gekoppelt. Die Stellelemente 26 sind im gezeigten Ausführungsbeispiel durch zwei separate, gegensinnig arbeitende elektromotorisch oder elektromagnetisch betätigte Linearmotoren 28 gebildet, denen jeweils Drucksensoren 30 und/oder Wegsensoren zugeordnet sind. In den beiden Stellantrieben der Linearantriebe 28 können mittels geeigneter Druck- oder Kraftsensoren 30 jeweils die Drücke oder Kräfte ermittelt werden (z.B. Differenzdrucksensor oder zwei Drucksensoren, Kraftsensoren etc.); ggf. kann auch die Bewegungs- bzw. Längendifferenz des sich verlängernden oder verkürzenden Stellelements 26 mittels der Wegsensoren oder auch mittels Dehnungsmessstreifen auf den Kolbenstangen oder deren Anbindungen am Gestänge 16 und/oder an der Aufhängung 20 ermittelt werden. Besonders sinnvoll ist bei der erfindungsgemäßen Verwendung von elektromotorischen oder elektromagnetischen Linearantrieben 28 die Messung bzw. Regelung der für die Aktivierung der Linearantriebe 28 erforderlichen elektrischen Stromstärken, woraus sich unmittelbar die resultierenden Stellkräfte ableiten lassen.

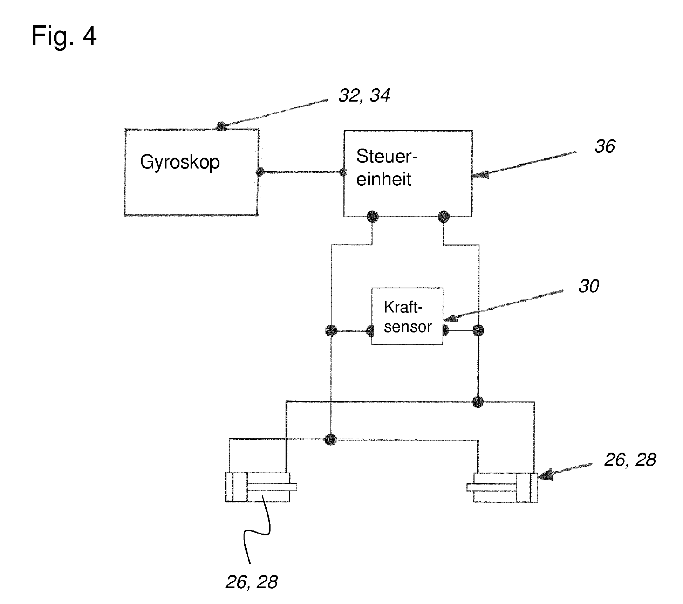

Das schematische Blockschaltbild der Fig. 4 verdeutlicht die Verschaltung der Komponenten bei einer Auslenkung des am Trägerfahrzeug 12 angelenkten Gestänges 16 zur einen oder anderen Seite bzw. zu dessen Halten in einer horizontalen Lage bei sich bewegendem Trägerfahrzeug 12, wenn dieses z.B. über unebenes Gelände fährt.

In den beiden Stellantrieben der Linearantriebe 28 werden jeweils die Drücke bzw. Kräfte ermittelt, insbesondere mittels einer Erfassung der für die Verstellung aufzubringenden Stromstärken. Ist keine Verstellung des Gestänges 16 notwendig, so wird die Differenzkraft auf einen minimalen Wert bzw. auf Null geregelt, so dass keine Stellkraft in das Gestänge 16 eingeleitet wird. Ist dagegen eine Verstellung des Spritzgestänges 16 relativ zur Aufhängung 20 um die Drehachse erforderlich, so wird eine definierte Differenzkraft eingestellt bzw. ein solcher Wert eingeregelt.

Die Ermittlung der Bewegungen des Spritzgestänges 16, insbesondere seine aktuellen Drehgeschwindigkeiten (absolute Werte) werden dabei über die Sensoranordnung 32, insbesondere über ein Gyroskop 34 ermittelt, die/das ihre Messwerte an die Steuereinheit 36 übermittelt. Durch Integration der erfassten Drehgeschwindigkeit kann der durch die Anstellung des Stellelements 26 bzw. der Stellelemente 26 zu erreichende Verdrehwinkel für das Spritzgestänge 16 errechnet werden. Darüber hinaus kann vorzugsweise vorgesehen sein, dass geringe Dreh- bzw. Wankbewegungen zunächst nicht aktiv nachgeregelt werden, wobei hierbei die Dämpfung des Gestänges 16 durch Elastizitäten in den Stellelementen 26 erfolgen kann. Die Steuer- bzw. Regeleinheit 36 wertet zudem die von den Kraftsensoren 30 - bspw. auch ein Differenzkraftsensor - gelieferten Messwerte aus und steuert entsprechend die Stellzylinder 28 an.

Im gezeigten Ausführungsbeispiel sind als Stellelemente 26 zwei gegenläufig arbeitende Linearmotoren 28 vorgesehen, wobei für jede Drehrichtung ein Linearmotor 28 vorgesehen ist. Als alternative Stellanordnung kann auch ein doppeltwirkender, in beide Arbeitsrichtungen (vor und zurück) wirkender Linearmotor eingesetzt werden.

Eine Alternative zur Differenzkraftmessung wäre die Verwendung wenigstens eines Dehnmessstreifens, der z.B. auf die Kolbenstange des wenigstens einen Stellelements 26 montiert werden kann. Findet keine Bewegung durch das Spritzgestänge 16 statt oder ist keine aktive Regelung erforderlich, so wird vom Dehnmessstreifen keine oder nur eine geringe Zug- und/oder Druckkraft ermittelt. Wird eine definierte Zug- oder Druckkraft überschritten, kann das Gestänge 16 wieder aktiv nachgeregelt werden, bzw. wird das Gestänge16 aufgrund der durch das Gyroskop vorgegebenen Werte auf eine bestimmte Zug- und/oder Druckkraft geregelt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Verteilvorrichtung
- 12: Trägerfahrzeug
- 14: Tank
- 16: Gestänge, Spritzgestänge
- 18: Auslegerarme
- 20: Aufhängung
- 22: Fahrtrichtung
- 24: Trägerrahmen
- 26: Stellelement
- 28: Linearmotor
- 30: Drucksensor, Kraftsensor
- 32: Sensoranordnung
- 34: Gyroskop
- 36: Steuereinheit, Regeleinheit

## Patentansprüche

1. Vorrichtung (10) zum Ausbringen von flüssigen und/oder festen Wirkstoffen, umfassend:
- ein Trägerfahrzeug (12),
- mindestens ein zumindest um eine Drehachse schwenkbar angeordnetes Gestänge (16),
- mindestens eine Sensoranordnung (32) zur Erfassung einer Drehgeschwindigkeit und/oder einer Drehlage des Gestänges (16) um die Drehachse in Bezug auf eine Referenzebene,
- eine Ausgangssignale der Sensoranordnungen (32) zu Steuerungssignalen verarbeitende Regelungseinrichtung (36),
- wenigstens einen in Abhängigkeit von Steuerungssignalen der Regelungseinrichtung (36) die momentane Drehlage des Gestänges um die Drehachse beeinflussenden Aktor (26),
- welcher wenigstens eine Aktor (26) durch wenigstens einen elektromotorisch und/oder elektromagnetisch arbeitenden Linear- oder Drehantrieb (28) gebildet ist, der eine Stellverbindung zwischen dem Trägerfahrzeug (12) und dem schwenkbaren Gestänge (16) herstellt, wobei der wenigstens eine Linear- oder Drehantrieb (28) für jede der beiden Verstellrichtungen des Gestänges (16) jeweils eine mit elektromagnetischer oder mit elektromotorischer Antriebskraft beaufschlagbare aktive Antriebs- oder Stellseite aufweist,
- wobei bei gegenüber dem Trägerfahrzeug (12) ruhendem oder sich geringfügig bewegendem Gestänge (16) ein ungefähr gleiches Kraftniveau in den aktiven Antriebsseiten bzw. Stellseiten zweier gegensinnig arbeitender Linear- oder Drehantriebe (28) bzw. eines doppelt wirkenden Linear- oder Drehantriebs (28) einstellbar ist,
- und wobei bei gegenüber dem Trägerfahrzeug (12) verstelltem Gestänge (16) eine definierte Differenzkraft zwischen den aktiven Antriebsseiten bzw. Stellseiten der beiden gegensinnig arbeitenden Linear- oder Drehantriebe (28) bzw. des doppelt wirkenden Linear- oder Drehantriebs (28) einstellbar ist.

2. Vorrichtung nach Anspruch 1, bei der die mindestens eine Sensoranordnung (32) zur Erfassung der Drehgeschwindigkeit (w) und/oder Drehlage des Gestänges (16) um die Drehachse in Bezug auf die Referenzebene mindestens einen am Gestänge (16) angeordneten Drehraten-, Drehwinkelgeschwindigkeits- und/oder Drehbeschleunigungssensor umfasst.

3. Vorrichtung nach Anspruch 1, bei der die mindestens eine Sensoranordnung (32) zur Erfassung der Drehgeschwindigkeit und/oder Drehlage des Gestänges (16) um die Drehachse in Bezug auf die Referenzebene mindestens einen am Trägerfahrzeug (12) angeordneten Drehraten-, Drehwinkelgeschwindigkeits- und/oder Drehbeschleunigungssensor umfasst.

4. Vorrichtung nach einem der Ansprüche 1 bis 3, bei der der wenigstens eine Aktor (26) durch wenigstens einen doppelt wirkenden, elektromotorisch oder elektromagnetisch arbeitenden Linearantrieb (28) gebildet ist, der eine Stellverbindung zwischen dem Trägerfahrzeug (12) und dem schwenkbaren Gestänge (16) herstellt, wobei ein mit einem Gestänge (16) gekoppelter, zwischen zwei Endlagen beweglicher Abschnitt des Linearantriebs (28) zwei Stellseiten aufweist, welche für jede der beiden Verstellrichtungen des Gestänges (16) jeweils mit elektromotorischer oder elektromagnetischer Stellkraft beaufschlagbar sind.

5. Vorrichtung nach Anspruch 4, bei der an beiden Stellseiten bei gegenüber dem Trägerfahrzeug (12) ruhendem oder sich geringfügig bewegendem Gestänge (16) ein ungefähr gleiches Kraftniveau anliegt.

6. Vorrichtung nach Anspruch 4 oder 5, bei der bei gegenüber dem Trägerfahrzeug (12) verstelltem Gestänge (16) eine definierte Differenzkraft zwischen den beiden Stellseiten des doppelt wirkenden Stellantriebs (28) einstellbar ist.

7. Vorrichtung nach einem der Ansprüche 1 bis 3, bei welcher der Aktor (26) durch wenigstens zwei gegensinnig und jeweils elektromotorisch oder elektromagnetisch arbeitende Linearantriebe (28) gebildet ist, die eine Stellverbindung zwischen dem Trägerfahrzeug (12) und dem schwenkbaren Gestänge (16) herstellen, wobei jeder der beiden Linearantriebe (28) jeweils eine Stell- oder Antriebsseite aufweist, und wobei jeweils einer der beiden Linearantriebe (28) für eine vorgegebene Verstellrichtung des Gestänges (16) mit elektromotorisch oder elektromagnetisch erzeugter Antriebskraft beaufschlagbar ist.

8. Vorrichtung nach Anspruch 7, bei der an beiden Stellseiten der beiden Linearantriebe (28) bei gegenüber dem Trägerfahrzeug (12) ruhendem oder sich geringfügig bewegendem Gestänge (16) ein ungefähr gleiches Kraftniveau anliegt.

9. Vorrichtung nach Anspruch 7 oder 8, bei der bei gegenüber dem Trägerfahrzeug (12) verstelltem Gestänge (16) eine definierte Differenzkraft zwischen den beiden Stellseiten oder Antriebsseiten der beiden Linearantriebe (28) einstellbar ist.

10. Verfahren zur Steuerung einer Vorrichtung (10) nach einem der Ansprüche 1 bis 9 anhand einer Regelung der Drehlage des um eine Drehachse beweglich an einem Trägerfahrzeug (12) angeordneten Gestänges (16) in Abhängigkeit von einer momentanen Drehlage und/oder einer gemessenen Differenzkraft an wenigstens zwei Stellseiten eines elektromotorisch oder elektromagnetisch betriebenen Aktors (26),
- wobei eine Differenzkraft bei ruhendem oder nur geringfügig aus einer Ruhelage bewegtem Gestänge (16) minimal ist und der Aktor (26) keine oder nur eine minimale Stellkraft zwischen Trägerfahrzeug (12) und Gestänge (16) aufbaut,
- und wobei bei einem zu verstellenden Gestänge (16) eine definierbare Differenzkraft zwischen den beiden Stellseiten aufgebaut wird,
- wobei eine aktuelle Drehgeschwindigkeit und/oder Drehlage des Gestänges (16) um die Drehachse in Bezug auf eine Referenzebene mittels mindestens einer Sensoranordnung (32) ermittelt wird,
- die einen am Gestänge (16) oder am Trägerfahrzeug (12) angeordneten Drehraten-, Drehwinkelgeschwindigkeits- und/oder Drehbeschleunigungssensor umfasst.

11. Verfahren nach Anspruch 10, bei dem sowohl die Messdaten der wenigstens einen Sensoranordnung (32) als auch die Differenzkräfte zwischen den beiden Stellseiten des wenigstens einen Aktors (26) zur Ermittlung einer aktuellen Drehlage und/oder einer Soll-Drehlage zwischen Gestänge (16) und Trägerfahrzeug (12) herangezogen und von einer Regelungseinrichtung (36) verarbeitet werden, die den wenigstens einen Aktor (26) ansteuert.
